# EUROPÄISCHE PATENTANMELDUNG

(11) **EP 3 444 288 A1**
(43) Veröffentlichungstag der Anmeldung: **20.02.2019**
(21) Anmeldenummer: 17186280.8
(22) Anmeldetag: 15.08.2017
(51) Int. Cl.: C08G 18/78, C07D 273/04, C08G 18/79, C08G 18/02

(54) **VERFAHREN ZUR HERSTELLUNG IMINOOXADIAZINDIONGRUPPEN ENTHALTENDER POLYISOCYANATE UNTER VERWENDUNG VON KATALYSATORENMISCHUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung von Polyisocyanaten, die mindestens 10 mol-% an Iminooxadiazindiongruppen, bezogen auf die Summe der im Polyisocyanat enthaltenen Iminooxadiazindion- und Isocyanuratgruppen, enthalten, durch Umsetzung wenigstens eines organischen Di- oder Polyisocyanats mit unabhängig voneinander aliphatisch, cycloaliphatisch und/oder araliphatisch gebundenen Isocyanatgruppen, in Gegenwart von Katalysatoren für die Isocyanatmodifizierung umfassend
- wenigstens ein quaternäres Phosphoniumsalz der allgemeinen Formel R₄P⁺ A⁻, wobei
R
unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Phosphor-atom auch gesättigte oder ungesättigte Cyclen bilden können, und
A⁻
für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann, und

- wenigstens ein quaternäres Ammoniumsalz der allgemeinen Formel R₄N⁺ A⁻, wobei
R
unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Stickstoffatom auch gesättigte oder ungesättigte Cyclen bilden können, und
A⁻
für ein Anion ausgewählt aus der Gruppe bestehend aus Hydroxid, Alkoholat, Carboxylat, Azolat, Imidazolat, Triazolat, Chlorid, Fluorid und Polyfluoridanionen (F⁻ · n(HF)} steht, wobei n beliebige Werte zwischen 0,1 und 20 annehmen kann,

mit der Maßgabe, dass A⁻ in wenigstens einem der quaternären Phosponiumsalze und/oder in wenigstens einem der quaternären Ammoniumsalze für Fluorid oder Polyfluoridanionen {F⁻ · n(HF)} steht, wobei n beliebige Werte zwischen 0,1 und 20 annehmen kann.

## Beschreibung

Die Erfindung betrifft ein Verfahren zur Herstellung von Polyisocyanaten, die mindestens 10 mol-% an Iminooxadiazindiongruppen, bezogen auf die Summe der im Polyisocyanat enthaltenen Iminooxadiazindion- und Isocyanuratgruppen (im weiteren Text auch als "Trimerengemisch" bezeichnet, Definition s. nächster Absatz), enthalten, durch Umsetzung wenigstens eines organischen Di- oder Polyisocyanats mit unabhängig voneinander aliphatisch, cycloaliphatisch und/oder araliphatisch gebundenen Isocyanatgruppen, in Gegenwart von Katalysatoren für die Isocyanatmodifizierung. Außerdem betrifft die Erfindung die Verwendung einer derartigen Mischung und die nach dem Verfahren erhältlichen Polyisocyanate. Ebenfalls betrifft die Erfindung ein Verfahren zur Herstellung eines Polyurethanlacks oder einer Polyurethanbeschichtung und den entsprechenden Polyurethanlack oder die Polyurethanbeschichtung selbst.

Aussagen zur strukturellen Zusammensetzung der Verfahrensprodukte beziehen sich prinzipiell auf die aus den vorher freien Isocyanatgruppen im Zuge der Modifizierungsreaktion gebildeten Strukturtypen, unabhängig vom (mittleren) Molekulargewicht der jeweils betrachteten Spezies und vom Ort und der Anzahl verschiedener eingebauter Strukturtypen, die aus der Reaktion der vorher freien NCO-Gruppen untereinander hervorgegangen sind.

Wird in diesem Zusammenhang lediglich die "Trimerisierung" bzw. die daraus resultierenden Spezies ("Trimerengemisch": der Begriff 'Trimerengemisch' steht hier immer für die Summe aus symmetrischen, Isocyanurate, und asymmetrischen Trimerstrukturen, Iminooxadiazindione) betrachtet, gilt beispielsweise folgendes: eine 1:1 Mischung aus dem idealen Isocyanurat-Trimeren des Hexamethylendiisocyanates (HDI) (1,3,5-Tris(6-isocyanatohexyl)isocyanurat) einerseits und dem dazu isomeren "asymmetrischen Trimer" (1-(6-isocyanatohexyl)imino-2-oxa-4,6-bis(6-isocyanatohexyl)-diazin-3,5-dion) der gleichen Molmasse (504,59 g/mol) andererseits enthält exakt 50% des jeweiligen Strukturtyps im Trimerengemisch. Das gleiche gilt für ein Molekül, aufgebaut aus 5 monomeren HDI-Einheiten, in dem ein durch 2 terminale 6-Isocyanatohexyl-Substituenten substituierter Iminooxadiazindionring und ein ebenfalls durch 2 terminale 6-isocyanatohexyl-Substituenten substituierter Isocyanuratring durch eine Hexamethylenkette verbrückt sind.

Explizit nicht als "Trimerisierung" im Sinne der vorliegenden Schrift wird beispielsweise eine Umsetzung von 3 Diisocyanatmolekülen unter Bildung von Uretdiongruppen zu einem ebenfalls 3 Monomereinheiten enthaltenden Oligomermolekül mit 2 terminalen NCO-Gruppen und zwei verbrückenden Uretdionfunktionen verstanden. Derartige Reaktionen werden in der Fachliteratur meist als "Dimerisierungen" und die daraus resultierenden Produktgemische häufig als "Dimerisate" bezeichnet, auch wenn hier sinngemäß das oben für die Trimerisierung und Trimerenmischungen ("Trimerisate") Gesagte bzgl. (mittlerem) Molekulargewicht der jeweils betrachteten Spezies und dem Ort und der Anzahl der verschiedenen eingebauten Strukturtypen gilt.

Die Oligo- bzw. Polymerisierung von Isocyanaten insbesondere unter Bildung von höhermolekularen Oligomerengemischen mit Uretdion- ("Dimer"), Isocyanurat- ("Trimer") und/oder Iminooxadiazindionstrukturen ("asymmetrisches Trimer") im Molekülgerüst ist seit langem bekannt. Wie vorstehend erkennbar, liegen der Oligo- bzw. Polymerisierung von Isocyanaten prinzipiell die gleichen chemischen Reaktionen zugrunde. Die Umsetzung einer kleineren Anzahl von Isocyanaten miteinander bezeichnet man als Oligomerisierung. Die Umsetzung einer größeren Anzahl von Isocyanaten bezeichnet man als Polymerisierung. Im Rahmen der vorliegenden Erfindung wird die vorstehend beschriebene Umsetzung bzw. Oligomerisierung bzw. Polymerisierung von Isocyanaten zusammenfassend als Isocyanatmodifizierung oder Modifizierung von Isocyanaten bezeichnet.

Enthalten die modifizierten Polyisocyanate freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Iminooxadiazindiongruppen enthaltende Polyisocyanate sind hierbei besonders interessante, hochwertige Rohstoffe u.a. für die Herstellung von Polyurethan-Lacken und Beschichtungen (vgl. DE-A 19 611 849 und darin zitierter Stand der Technik). So sind Iminooxadiazindiongruppen enthaltende Polyisocyanate die am niedrigsten viskosen, mindestens NCO-trifunktionellen (Di)isocyanat-Oligomeren.

Bei der technischen Herstellung Iminooxadiazindiongruppen enthaltender Polyisocyanate mit den in den Beispielen der DE-A 19 611 849 aufgeführten Ammoniumpolyfluorid-Katalysatoren hat sich allerdings gezeigt, dass die so erhaltenen Produkte mitunter ein für qualitativ hochwertige Lackharze unakzeptabel hohes Trübungsniveau aufweisen und dass der Anteil an asymmetrischem Trimer im Trimerengemisch recht schwankend und gegenüber dem Laborversuch nur schlecht reproduzierbar sein kann.

Diese Probleme werden nach der Lehre der EP 0 962 455 A1 durch den Einsatz von Katalysatoren auf Basis quaternärer Phosphonium(poly)fluoride gelöst.

Die Verwendung von Fluoriden und Hydrogenpolyfluoriden (letztere sind stabile Addukte von HF an Fluorid-Ionen enthaltenden Verbindungen), optional auch in Form ihrer Ammonium- oder Phosphoniumsalze, für die Isocyanatmodifizierung ist u.a. bekannt aus den EP 962 455 A1, EP 962 454 A1, EP 896 009 A1, EP 798 299 A1, EP 447 074 A1, EP 379 914 A1, EP 339 396 A1, EP 315 692 A1, EP 295 926 A1, EP 235 388 A1, WO 2015/124504 A1, WO 2017/029266 A1, JP 2014214301 A2, JP 2014214302 A2, JP 2014231599 A2 und JP 2014231600 A2.

Allerdings ist bei der Katalyse mit quaternären Phosphonium(poly)fluoriden eine starke Abhängigkeit der Selektivität der Reaktion bezüglich der bevorzugten Bildung von Iminooxadiazindiongruppen von der Menge an eingesetztem Katalysator, bezogen auf eingesetztes Monomer (im weiteren Text auch als Katalysatorkonzentration bezeichnet), zu verzeichnen. So wird bei sehr niedriger Katalysatorkonzentration unter ansonsten identischen Reaktionsbedingungen (insbesondere Temperatur, Verweilzeit oder Reaktorgeometrie) ein starker Abfall der Iminooxadiazindion-Selektivität beobachtet.

Wird die Modifizierung in einem speziellen, kontinuierlichen Verfahren gemäß WO 2013/079614 A2 geführt, sind derartige Nachteile nicht zu verzeichnen. Allerding erscheint es wünschenswert, auch ohne den Einsatz derartigen Equipments, d.h. z.B. in gewöhnlichen Rührkesseln, ebenfalls vom Vorteil eines sehr niedrigen Katalysatorbedarfes zu profitieren ohne jedoch Nachteile in der Iminooxadiazindion-Selektivität hinnehmen zu müssen.

Aufgabe der Erfindung war es daher, ein Verfahren zur Verfügung zu stellen, bei dem die Vorteile der Katalyse mit quaternären Phosphoniumpolyfluoriden aufrecht erhalten bleiben, die nachteilige Selektivitätsabsenkung bei erniedrigter Katalysatorkonzentration in weit geringerem Maße auftritt.

Diese Aufgabe wurde gelöst durch ein Verfahren zur Herstellung von Polyisocyanaten, die mindestens 10 mol-% an Iminooxadiazindiongruppen, bezogen auf die Summe der im Polyisocyanat enthaltenen Iminooxadiazindion- und Isocyanuratgruppen, enthalten, durch Umsetzung wenigstens eines organischen Di- oder Polyisocyanats mit unabhängig voneinander aliphatisch, cycloaliphatisch und/oder araliphatisch gebundenen Isocyanatgruppen, in Gegenwart von Katalysatoren für die Isocyanatmodifizierung umfassend
- wenigstens ein quaternäres Phosphoniumsalz der allgemeinen Formel R₄P⁺ A⁻, wobei
   - R: unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Phosphoratom auch gesättigte oder ungesättigte Cyclen bilden können, und
   - A⁻: für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann, und
- wenigstens ein quaternäres Ammoniumsalz der allgemeinen Formel R₄N⁺ A⁻, wobei
   - R: unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Stickstoffatom auch gesättigte oder ungesättigte Cyclen bilden können, und
   - A⁻: für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann,
mit der Maßgabe, dass A⁻ in wenigstens einem der quaternären Phosponiumsalze und/oder in wenigstens einem der quaternären Ammoniumsalze für Fluorid oder Polyfluoridanionen {F⁻ · n(HF)} steht, wobei n beliebige Werte zwischen 0,1 und 20 annehmen kann.

Überraschenderweise konnten durch Einsatz einer Mischung von Katalysatoren (folgend auch als Katalysatormischung bezeichnet) aus Phosphoniumpolyfluoriden und anderen, an sich als Isocyanat-Oligomerisierungskatalysatoren bekannten Verbindungen des Standes der Technik, die erfindungsgemäßen Vorteile erreicht werden.

Im Folgenden ist der Begriff "Trimerengemisch" ebenfalls wie eingangs definiert zu verstehen.

In einer ersten bevorzugten Ausführungsform enthalten die Polyisocyanate mindestens 30 mol-%, bevorzugt mindestens 35 mol-% und ganz besonders bevorzugt mindestens 40 mol-% an Iminooxadiazindiongruppen, bezogen auf die Summe der im Polyisocyanat enthaltenen Iminooxadiazindion- und Isocyanuratgruppen. Besonders bevorzugt werden hierbei als umzusetzende organische Di- oder Polyisocyanate aliphatische und/oder cycloaliphatische Diisocyanate eines Molekulargewicht(sbereich)es von 154 - 600 g/mol als reine Verbindungen oder in beliebiger Abmischung untereinander eingesetzt.

Zur Durchführung des erfindungsgemäßen Verfahrens kann das Mengenverhältnis der quaternären Phosphoniumsalze und quaternären Ammoniumsalze über einen breiten Bereich frei gewählt werden, vorzugsweise werden Mischungen von Verbindungen der Summenformel R₄P⁺ F⁻ · n(HF) einerseits und R₄N⁺ A⁻ andererseits, alternativ auch R₄N⁺ F⁻ · n(HF) einerseits und R₄P⁺ A⁻ andererseits, eingesetzt, wobei R unabhängig voneinander für gleiche oder verschiedene, substituierte oder unsubstituierte, ggf. verzweigte, ggf. substituierte, aliphatische C₁-C₂₀ Reste, aromatische C₆-C₂₀ Reste oder araliphatische C₇-C₂₀ Reste steht und A⁻ unabhängig voneinander für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann. Kommerziell erhältlich, zumindest in Form ihrer Salze mit anderen als Polyfluorid-Anionen, sind z.B. Chloride, Bromide, Iodide, (Hydrogen)sulfate, Hydroxide, Alkanoate etc.. Diese lassen sich z.B. gemäß Synthesis 1988, 12, 953-5 (vgl. auch Beispiel 1 der vorliegenden Erfindung) leicht in die Polyfluoridform überführen. Insbesondere sind Tetramethylammonium-fluorid, - chlorid und -bromid; Tetraethylammonium-fluorid, -chlorid und - bromid, Tetrabutylammonium-fluorid, -chlorid und -bromid, sowie Trimethyl(Alkyl)ammoniumchlorid, -hydroxid, -acetat mit "Alkyl" = Benzyl, Lauryl, Cetyl, Dodecyl etc. technisch (z.B. unter den Handelsnahmen Triton B, Adogen oder Aliquat) gut verfügbare Verbindungen.

In einer weiteren bevorzugen Ausführungsform enthalten 5 bis 95 mol-%, bevorzugt 10 bis 90 mol-% und besonders bevorzugt 20 bis 80 mol-% der eingesetzten Katalysatoren als Anion A⁻ Spezies vom Fluorid bzw. Polyfluoridtyp. Es ist dabei unerheblich, ob das (Poly)fluorid-Anion ursprünglich aus dem quaternären Phosphoniumsalz der allgemeinen Formel R₄P⁺ A⁻ stammt, oder über das quaternäre Ammoniumsalz der allgemeinen Formel R₄N⁺ A⁻ in das Verfahren gelangt ist.

In einer weiteren bevorzugen Ausführungsform enthalten 5 bis 95 mol-%, bevorzugt 10 bis 90 mol-% und besonders bevorzugt 20 bis 80 mol-% der eingesetzten Katalysatoren als Kation Spezies vom Phosphoniumtyp R₄P⁺.

In einer weiteren bevorzugten Ausführungsform ist das quaternäre Ammoniumsalz eine Verbindung, bei der das ladungstragende Stickstoffatom im Kation Teil eines, ggf. spirocyclischen, Ringsystemes gemäß den allgemeinen Formeln I und II ist, 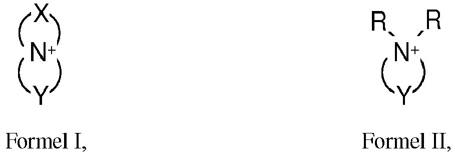 in welchen R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und die N-ständigen Substituenten X und Y für gleiche oder verschiedene, substituierte oder unsubstituierte, ggf. durch Heteroatome (O, N, S) sowie aromatische Ringe unterbrochene C₂-C₂₀-Alkylenketten stehen.

Verbindungen der allgemeinen Formel I sind in einfacher Weise nach literaturbekannten Methoden (z.B. US 2007/0049750 und darin zit. Literatur) beispielsweise durch Umsetzung von sekundären cyclischen Aminen mit geeignet substituierten Dihalogenalkanen, ggf. in Gegenwart eines Halogenwasserstofffängers, und ggf. anschließendem Anionenaustausch zugänglich.

Bevorzugt können X und Y in Formel I und Y in Formel II unabhängig voneinander für ggf. substituierte Alkylengruppen stehen, wobei C₄-C₆-Alkylenketten insbesondere in beiden N-zentrierten Ringen besonders bevorzugt sind. Die C₄-C₆-Alkylenketten sind dabei vorzugsweise linear aufgebaut. Diese sind z.B. in einfacher Weise durch Reaktion von ggf. C-substituierten Pyrrolidinen, Piperidinen und Azepanen (1H-Hexahydroazepinen) mit 1,4-Dihalogenbutan, 1,5-Dihalogenpentan oder 1,6-Dihalogenhexan sowie deren C-substituierter Derivate zugänglich, wobei Halogen für Cl, Br und I, bevorzugt Cl, steht.

Weiterhin sind beispielsweise durch analoge Umsetzung von ggf. C-substituierten Oxazolidinen, Isoxazolidinen, Oxazinanen, Morpholinen und Oxazepanen sowie den Analoga der vorstehend genannten N-O-Heterocyclen, die S statt O enthalten, weiterhin Imidazolidinen, Pyrazolidinen, Piperazinen und strukturell verwandten Verbindungen mit o.g. Dihalogenalkanen auch Vertreter zugänglich, die in einem der Segmente X oder Y der allg. Formel I durch Heteroatome unterbrochene C-Ketten aufweisen. Bei den 2 oder mehr Stickstoffatome enthaltenden Spezies besteht darüber hinaus die Möglichkeit, durch entsprechende Variation der Reaktionsbedingungen auch Salze mit zwei- bzw. mehrfach geladenem Kation zu erzeugen oder durch vorherige geeignete Substitution des bzw. der N-Atome zu einfach positiv geladenen Kationen der Formel I zu gelangen in denen sich ein bzw. mehrere exocyclische(r) Alkylsubstituent(en) an dem bzw. den dreibindigen N-Atom(en) des Ringes X bzw. Y befindet bzw. befinden.

Natürlich lässt sich auch durch geeignete Wahl des Alkylierungsmittels eine strukturelle Variation in das Ringsegment X oder Y einbringen, beispielhaft seien Reaktionen von Bis(2-halogenethyl)ethern mit den o.g. sekundären, cyclischen Aminen genannt.

Beispiele solcher Synthesen sind beispielsweise in US 2007/0049750 A1 beschrieben, deren Inhalt hiermit vollumfänglich als in die vorliegende Anmeldung aufgenommen gilt, insbesondere hinsichtlich der Abschnitte [0015] bis [0039] dieser Druckschrift.

Die Verbindungen der allgemeinen Formel II sind in einfacher Weise nach literaturbekannten Methoden (z.B. Houben-Weyl, Methoden der Organischen Chemie, 4. Aufl., Bd. XI/2, S. 591-640 und darin zit. Literatur) beispielsweise durch Alkylierung tertiärer cyclischer Amine RNY, wobei NY für vorstehend genanntes cyclisches Segment steht, mit Halogenalkanen Hal-R und optional anschließendem Anionenaustausch zugänglich, wobei Halogen für Cl, Br und I, bevorzugt Cl, steht. Alternativ kann beispielsweise bei Carboxylaten sowie Carbonaten auch unmittelbar mit den Carbonsäureestern alkyliert werden, die R im Esterrest tragen, hierbei sind Methylester bevorzugt.

Alternativ kann das N-haltige Ringsegment auch im Zuge einer (ggf. simultan geführten) Alkylierungs/Quaternisierungsreaktionsfolge an Ammoniak sowie primären bzw. sekundären Aminen der Formeln RNH₂ bzw. R₂NH gewonnen werden.

In einer weiteren Ausführungsform steht R in Formel I oder II für, ggf. am aromatischen Kern substituierte, Benzylreste.

Weiterhin sind beispielsweise durch analoge Umsetzung von an N durch R substituierten Verbindungen (ggf. C-substituierten Oxazolidinen, Isoxazolidinen, Oxazinanen, Morpholinen und Oxazepanen sowie den Analoga der vorstehend genannten N-O-Heterocyclen, die S statt O enthalten, weiterhin Imidazolidinen, Pyrazolidinen, Piperazinen und strukturell verwandten Verbindungen) mit vorstehend genannten Halogenalkanen auch Verbindungen zugänglich, die im Segment Y der Formel II durch Heteroatome unterbrochene C-Ketten aufweisen.

Die Alkylenkette des Segmentes Y in Formel II kann selbstverständlich noch weitere Ringe aufweisen. Beispielhaft seien genannt: am N-Atom mit R subsituierte 8-Azabicyclo[3.2.1]octane sowie 2-Azatricyclo[3.3.1.1^{3,7}]decane (2-Alkyl-2-aza-adamantane) und Derivate dieser.

Bei den 2 oder mehr Stickstoffatome enthaltenden Spezies der Formeln I und II besteht darüber hinaus die Möglichkeit, durch entsprechende Variation der Reaktionsbedingungen auch Salze mit zwei- bzw. mehrfach geladenem Kation zu erzeugen oder durch vorherige geeignete Substitution des bzw. der N-Atome zu einfach positiv geladenen Kationen der Formeln I oder II zu gelangen in denen sich ein bzw. mehrere exocyclische(r) Alkylsubstituent(en) an dem bzw. den dreibindigen N-Atom(en) eines oder beider Ringe X und/oder Y befindet bzw. befinden.

Natürlich lässt sich auch bei Verbindungen der Formel II, in Analogie zum weiter oben bezüglich der Verbindungen der Formel I gesagten, durch geeignete Wahl des Alkylierungsmittels eine strukturelle Variation in das Ringsegment Y einbringen, beispielhaft seien Reaktionen von Bis(2-halogenethyl)ethern mit den sekundären Aminen R₂NH genannt.

Als Anionen können bei den Verbindungen der Formeln I und II prinzipiell alle Spezies zum Einsatz kommen, die als katalytisch aktiv gegenüber Isocyanaten bekannt sind, insbesondere sind das Hydroxid, Alkoholat, Carboxylat, Heterocyclen mit mindestens einem negativ geladenen Stickstoffatom im Ring wie Azolat, Imidazolat, Triazolat, Chlorid aber auch Fluorid, Hydrogendifluorid und höhere Polyfluoride (Addukte von mehr als einem Äquivalent HF an Fluorid-Ionen enthaltenden Verbindungen). Diese höheren Polyfluoride werden vorliegend auch als Polyfluoridanionen {F⁻ · n(HF)} bezeichnet, wobei n beliebige Werte zwischen 0,1 und 20 annehmen kann.

Die Lösungen quaternärer Ammoniumhydroxide und/oder Phosphoniumhydroxide können in verschiedenen Alkoholen liegen je nach pKs-Wert der Base und des verwendeten Alkohols teilweise oder vollständig als Ammoniumsalze und/oder Phosphoniumsalze mit Alkoholatanion vor. Dieses Gleichgewicht kann durch Entfernung des aus dieser Reaktion resultierenden Reaktionswassers ganz auf die Seite vollständiger Alkoholatbildung verschoben werden. Als Methoden zur Wasserentfernung eignen sich dabei alle aus der Literatur hierfür bekannten Methoden, insbes. die Azeotropdestillation ggf. unter Zuhilfenahme eines geeigneten Schleppmittels.

Als Phosphoniumsalze eignen sich ebenfalls eine Reihe z.T. gut kommerziell verfügbarer Verbindungen wie z.B. Tetrakis(hydroxymethyl)phosphoniumchlorid und -sulfat, Tetraethyl-, Tetrabutyl-, Tetraoctyl-, Tetrakis(hexadecyl)-, Tributyl(tetradecyl)-, Tributyl(hexadecyl)- und Trioctyl(octadecyl)phosphonium-chlorid, -bromid, -hydroxid und/oder iodid. Auch die Verwendung von Trialkyl(aryl)- sowie Triaryl(alkyl)-derivaten ist prinzipiell möglich.

In einer weiteren bevorzugten Ausführungsform wird die Umsetzung in Gegenwart wenigstens eines Alkohols mit einem Molekulargewicht von 32 - 250 g/mol durchgeführt, bevorzugt wird dieser Alkohol als Katalysatorlösungsmittel eingesetzt. Wenn der vorstehend genannte Alkohol ein polymerer Alkohol sein sollte, so ist das Molekulargewicht von 32 - 250 g/mol als zahlenmittleres Molekulargewicht zu verstehen. Unter dem Begriff Alkohol sind vorliegend auch Verbindungen zu verstehen, die mehr als eine Hydroxygruppe aufweisen.

Da die überwiegende Zahl dieser Verbindungen als Reinstoff fest ist bzw. nur in Lösung gehandhabt werden kann (Hydroxide), benötigt man für ihren Einsatz bei der erfindungsgemäßen Isocyanat-Trimerisierung in der Regel Katalysatorlösungsmittel. Hierfür eignen sich beispielsweise geradkettige und verzweigte, primäre, sekundäre und tertiäre Alkohole mit ein bis zwanzig C-Atomen, bevorzugt ein bis acht C-Atomen, z.B. Methanol, Ethanol, n- sowie iso-Propanol, 1- und 2-Butanol, iso-Butanol und 2-Ethylhexanol. Hieraus ergibt sich der Vorteil, dass diese Alkohole in die Polyisocyanate eingebaut werden, ohne sich in den eingesetzten Mengen nachteilig auf die Produkteigenschaften auszuwirken.

Da insbesondere die quaternären Ammonium- aber auch Phosphoniumhydroxide in hochkonzentrierten Lösungen bzw. bei thermischer Belastung zur Zersetzung neigen, ist die Überführung letzterer, beispielsweise durch Abmischung mit HF oder den o.g. Polyfluoriden mit n > 2, gut zur Gewinnung der erfindungsgemäßen Katalysatormischungen geeignet. Optional kann im Anschluß das Lösemittel, in dem das quaternäre Ammonium- bzw. Phosphoniumhydroxid ursprünglich gelöst vorlag, abgetrennt werden. War dieses Lösemittel Wasser oder enthielt eine der beiden Ausgangslösungen oder auch beide sehr viel Wasser und legt man, wie allgemein in der Polyisocyanatchemie üblich, auf niedrige Rest-Wassergehalte der finalen Lösungen der Katalysatormischungen wert, bietet sich im Anschluß an die Herstellung der Katalysatormischung eine Wasserabtrennung an, beispielsweise die Azeotroptrocknung mit dem als Katalysatorlösemittel verwendeten Alkohol, z.B. Butanole oder Octanole (es können alle Isomeren verwendet werden, d.h. z.B. n-, 2-, iso- oder tert-Butanol sowie z.B. 2-Ethylhexanol).

Obwohl ganz allgemein der Einsatz von Polyfluoriden in zahlreichen der eingangs zitierten Vorveröffentlichungen erwähnt wird, läßt sich für den Fachmann aus den dort getroffenen Ausführungen kein Schluß auf den besonders vorteilhaften Einsatz von Mischungen der quaternären Ammonium- und Phosphoniumsalze für die gut reproduzierbare und vor allem unter allen Herstellbedingungen trübungsfreie Herstellung von Polyisocyanaten mit einem besonders hohen Iminooxadiazindiongruppengehalt, auch bei niedrigen Katalysatorkonzentrationen, schließen.

So wäre der Fachmann in Anbetracht der Ausführungsbeispiele der DE-A 19 611 849 (Katalyse mit Polyfluoriden ausschließlich auf Basis quaternärer Ammoniumsalze) in Kombination mit der Lehre der EP 0 962 455 A1 zu der Annahme gekommen, die untypischen Wärmeproduktionsverläufe einher gehend mit schlechter und nicht reproduzierbarer Iminooxadiazindion-Selektivität hinnehmen zu müssen.

Die besondere Rolle, die offenbar einer Mischung verschiedener Kationen im Katalysatorgemisch zukommt, ist nicht vorbeschrieben und überaus überraschend.

Durch die überraschende Beobachtung, dass die Art des Gegenions für das Polyfluoridanion (hier: quaternäres Ammonium und Phosphonium) einen entscheidenden Einfluß auf den reproduzierbaren Verlauf der gewünschten Reaktion unter Bildung hochwertiger Produkte mit hohem Iminooxadiazindiongruppengehalt und einheitlicher Qualität (z.B. geringe Trübung) auch und gerade bei niedriger Katalysatorkonzentration hat, hebt sich die vorliegende Erfindung von der DE-A 19 611 849 bzw. der EP 0 962 455 A1 ab, die nur ganz allgemein den Einsatz von Polyfluoriden zur Isocyanat-Trimerisierung unter Iminooxadiazindiongruppenbildung bzw. die Verwendung von reinen Phosphonium-(poly)fluoriden hierfür beschreiben.

Das erfindungsgemäße Verfahren kann in einem Temperaturbereich von ca. 20 °C (Zimmertemperatur) bis ca. 200 °C, bevorzugt zwischen 30 °C und 120 °C, besonders bevorzugt zwischen 40 °C und 100 °C unter anteiliger Umsetzung der beteiligten Isocyanatgruppen des/der Ausgangs(poly)isocyanat(es)/mischung erfolgen, wobei der Umsetzungsgrad U_{NCO}, berechnet als Quotient aus der Differenz des NCO-Gehaltes des/der Ausgangs(poly)isocyanat(es)/mischung vor der Trimerisierung und des NCO-Gehaltes der Reaktionsmischung nach Abbruch der Reaktion und dem NCO-Gehalt des/der Ausgangs(poly)isocyanat(es)/mischung vor der Trimerisierung, zwischen 5% und 60%, bevorzugt zwischen 10% und 40% liegt.

Zum Reaktionsabbruch, d.h. zur Desaktivierung des Katalysatorsystems nach Erreichen des gewünschten U_{NCO}, eignen sich prinzipiell alle vorbeschriebenen Methoden des Standes der Technik, wie sie beim Abstoppen der Modifizierungsreaktion unter Isocyanuratbildung angewandt werden. Das sind z.B. die Zugabe unter- oder auch überstöchiometrischer Mengen an starken Säuren oder Säurederivaten (z.B. Benzoylchlorid, saure Ester der phosphorigen Säure und der Phosphorsäure, diese Säuren selbst, Schwefel enthaltende Säuren wie Benzolsulfonsäure, Toluolsulfonsäure (alle Isomeren), Dodecylbenzolsulfonsäure (alle Isomeren), Naphthalin-monosowie -di-, tri-, etc. -Sulfonsäuren (alle Isomeren), etc., nicht jedoch HF), adsorptive Bindung des Katalysators und anschließende Abtrennung insbesondere durch Filtration, thermische Desaktivierung.

Dabei nicht umgesetztes Monomer kann nach Desaktivierung des Katalysatorsystems nach einem beliebigen Verfahren des Standes der Technik, z.B. durch (Dünnschicht)destillation oder Extraktion, abgetrennt und anschließend wiederverwendet werden.

Die Entfernung von überschüssigem/n Ausgangsisocyanat/en, sofern es sich bei diesem/n um (ein) niedermolekulare(s), 'monomere(s)' (Di)isocyanat(e) handelt, erfolgt vorzugsweise, wenn die erfindungsgemäßen Verfahrensprodukte für Anwendungen auf dem Polyurethanlack- und beschichtungsmittelsektor bestimmt sind. Hierbei profitiert man von der exzellenten Farbzahl und - stabilität der Verfahrensprodukte sowie ihrer hohen Rückspaltstabilität in das/die zugrundeliegende(n) monomere(n) (Di)isocyanat(e).

Zur Herstellung der erfindungsgemäßen Trimeren(mischungen) genügen Katalysatorkonzentrationen, bezogen auf eingesetzte(s) (Poly)isocyanat(mischung) und das Fluoridion (rel. Molmasse 19), zwischen 1 ppm und 0,1%, besonders bevorzugt zwischen 1 und 100 ppm.

Nach einer besonderen, kontinuierlich arbeitenden Ausführungsform des erfindungsgemäßen Verfahrens wird die Oligomerisierung in einem Rohrreaktor vorgenommen. Hierbei profitiert man von der sehr geringen Neigung der erfindungsgemäßen Katalysatormischungen, auch bei Applikation in hochkonzentrierter Lösung bzw. als reiner Wirkstoff, Gelteilchen im Produkt zu bilden.

Das erfindungsgemäße Verfahren kann sowohl lösungsmittelfrei als auch unter Verdünnung des Ausgangs(poly)isocyanates bzw. der Ausgangs(poly)isocyanat(mischung)e(n) durchgeführt werden. Zur Verdünnung eignen sich hierbei alle, gegenüber NCO-Gruppen inerte organische Verbindungen wie Toluol, Xylol(e), höhere Aromaten, Ester, Ether, Ketone, C₁₂-C₂₀-Alkylsulfonsäureester, Halogenalkane sowie Gemische derartiger Lösungsmittel.

Zur Durchführung des erfindungsgemäßen Verfahrens können alle Di- oder Polyisocyanate mit einem (mittleren) Molekulargewicht von 154 - 600 g/mol mit unabhängig voneinander aliphatisch, cycloaliphatisch und/oder araliphatisch gebundenen Isocyanatgruppen in reiner Form oder als beliebige Mischungen untereinander verwendet werden. Beispielhaft seien genannt: Pentamethylendiisocyanat (PDI), Hexamethylendiisocyanat (HDI), 2-Methylpentan-1,5-diisocyanat (MPDI), 1,3- sowie 1,4-Bis(isocyanatomethyl)cyclohexan (1,3- sowie 1,4-H₆-XDI), 1,3- sowie 1,4-Bis(isocyanatomethyl)benzol (1,3- sowie 1,4-XDI), 3(4)-Isocyanatomethyl-1-methylcyclohexylisocyanat (IMCI); Isophorondiisocyanat (IPDI), Bis(isocyanatomethyl)norbornan (NBDI), 4-Isocyanatomethyl-1,8-octandiisocyanat (Triisocyanatononan, TIN), 1,3-Bis(isocyanatomethyl)benzol, 1,3-Bis(2-isocyanatopropyl-2)benzol und Bis(4(2)-Isocyanatocyclohexyl)methan (H₁₂MDI, Desmodur® W, Produkt der Covestro AG). Hierbei ist es belanglos, nach welchen Verfahren die vorstehend genannten (Poly)isocyanate hergestellt werden, d.h. mit oder ohne Verwendung von Phosgen.

Bevorzugt wird das organische Di- oder Polyisocyanat ausgewählt aus der Gruppe bestehend aus PDI, HDI, MPDI, 1,3- sowie 1,4-H₆XDI, 1,3- sowie 1,4-XDI, NBDI und Mischungen aus HDI und IPDI.

Es kann weiterhin von Vorteil sein, Gemische bestimmter (Poly)isocyanate im erfindungsgemäßen Verfahren einzusetzen, beispielsweise um dem Anforderungsprofil des jeweiligen Produktes bzw. Produktgemisches optimal zu entsprechen. So werden in vielen Anwendungen, beispielsweise bei der Automobil(erst)lackierung, Polyisocyanatgemische auf Basis, ggf. verzweigter, linearaliphatischer, z.B. HDI, einerseits und cycloaliphatischer Diisocyanate, z.B. IPDI oder H₁₂MDI (Desmodur® W-Handelsprodukt der Covestro Deutschland AG), andererseits eingesetzt. Diese Gemische werden in der Regel durch nachträgliches Abmischen von Polyisocyanaten auf Basis von Diisocyanaten des einen mit denen des anderen Typs hergestellt. Es kann aber auch von Vorteil sein, sie durch simultane Mischoligomerisierung aus dem entsprechenden Gemisch der monomeren Komponenten herzustellen (EP-A 00 47 452). Viele Polyisocyanate auf Basis cycloaliphatischer Diisocyanate des Standes der Technik sind fest. Sie weisen zuweilen eine derart hohe Schmelzviskosität auf, dass mitunter schon die Monomerenabtrennung durch (Dünnschicht)destillation erhebliche Schwierigkeiten bereitet. Deshalb bedarf es zu ihrer Verarbeitung bzw. mitunter auch bereits bei der Dünnschichtdestillation der Verwendung von Lösungsmitteln bzw. von Fließhilfsmitteln. Will man keine allzu großen Einbußen in Umsetzungsgrad (Harzausbeute) und NCO-Funktionalität bei der Herstellung dieser Polyisocyanate hinnehmen, sind Lösungskonzentrationen um 70% (Fest)harz, z.B. bei Isocyanurat-Polyisocyanaten auf Basis cycloaliphatischer Diisocyanate, bei gut verarbeitbaren dynamischen Viskositäten zwischen fünfhundert mPas und zehn Pas (gemessen bei 23 °C) marktüblicher Stand der Technik.

Trimerisiert man hingegen Gemische linearaliphatischer, z.B. HDI, und cycloaliphatischer Diisocyanate, z.B. IPDI, gemäß dem erfindungsgemäßen Verfahren unter (teilweiser) Iminooxadiazindionbildung, erhält man auch bei Zimmertemperatur fließfähige Produkte (Viskosität bei 23 °C unter 100 Pas) die zudem bei sukzessiver Lösungsmittelzugabe eine drastisch schnellere Viskositätsabnahme aufweisen, als Produkte entsprechender Zusammensetzung (NCO-Funktionalität, Diisocyanatbasis, mittleres Molekulargewicht) des Standes der Technik.

Verwendung einer Mischung umfassend
- wenigstens ein quaternäres Phosphoniumsalz der allgemeinen Formel R₄P⁺ A⁻, wobei
   - R: unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Phosphor-atom auch gesättigte oder ungesättigte Cyclen bilden können, und
   - A⁻: für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann, und
- wenigstens ein quaternäres Ammoniumsalz der allgemeinen Formel R₄N⁺ A⁻, wobei
   - R: unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Stickstoffatom auch gesättigte oder ungesättigte Cyclen bilden können, und
   - A⁻: für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann,
mit der Maßgabe, dass A⁻ in wenigstens einem der quaternären Phosponiumsalze und/oder in wenigstens einem der quaternären Ammoniumsalze für Fluorid oder Polyfluoridanionen {F⁻ · n(HF)} steht, wobei n beliebige Werte zwischen 0,1 und 20 annehmen kann, als Katalysator für die Isocyanatmodifizierung.

Die nach dem erfindungsgemäßen Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlagstoffen dar.

Gegenstand der Erfindung sind schließlich auch die nach dem erfindungsgemäßen Verfahren herstellbaren oder hergestellten Polyisocyanate. Aus dem erfindungsgemäßen Verfahren ergibt sich in den erfindungsgemäßen Produkte für das jeweilige umzusetzende organische Di- oder Polyisocyanate oder die jeweiligen Mischungen eine optimale Balance aus vorhandenen Iminooxadiazindiongruppen und Fluorgehalt welche sich mit den im Stand der Technik bekannten einzelnen Katalysatoren bisher nicht erreichen ließ.

Die erfindungsmäßen Polyisocyanate lassen sich vorzugsweise in einem Verfahren zur Herstellung von Polyurethanlacken und Polyurethanbeschichtungen einsetzen, was ebenfalls Gegenstand der vorliegenden Erfindung ist. Hierbei werden die Polyisocyanate mit Verbindungen, die gegenüber NCO-Gruppen reaktive Gruppen aufweisen, vermischt und unter Aushärtung umgesetzt werden. Vorliegend unterscheiden sich die Begriffe Polyurethanlack und Polyurethanbeschichtung in den jeweiligen Schichtdicken, so weist der Lack eine deutlich dünnere Schichtdicke als die Beschichtung auf.

Ein weiterer Gegenstand der Erfindung sind die aus den erfindungsgemäßen Polyisocyanaten erhältlichen Polyurethanbeschichtungen selbst. Vorliegend umfasst die Definition "Polyurethan" auch die strukturanalogen Polyharnstoffe, welche sich durch die Umsetzung von NCO-Gruppen mit dem Fachmann bekannten Polyaminen herstellen lassen, wobei sich die "Polyurethane" im engeren Sinne durch die Umsetzung von NCO-Gruppen mit Polyhydroxyverbindungen herstellen lassen.

Vor ihrer Verwendung als Isocyanat-Komponente in Polyurethansystemen können die Verfahrensprodukte ggf. an den Isocyanatgruppen weiter modifiziert werden, beispielsweise durch Einführung von Urethan-, Harnstoff-, Biuret- und/oder Allophanatgruppen oder durch eine teilweise oder vollständige Umsetzung der NCO-Gruppen mit speziellen, wieder abspaltbaren Verbindungen ('Blockierung'). Hierfür eignen sich beispielsweise Phenole, Lactame wie z.B. ε-Caprolactam, Oxime, Di- und Triazole, bestimmte Amine wie z.B. Diisopropylamin, CH-acide Verbindungen wie z.B. Malonsäuredialkylester, Acetessigester etc. Insbesondere zur Herstellung von, ggf. wasserdipergierbaren Ein- und Zweikomponenten-Polyurethanlacken eignen sie sich, ggf. in NCO-blockierter Form, aufgrund ihrer im Vergleich zu (überwiegend) Isocyanurat-Polyisocyanat basierenden Produkten verringerten Lösungs- sowie Schmelzviskosität bei ansonsten gleich hohem bzw. verbessertem Eigenschaftsprofil. So sind die erfindungsgemäßen Verfahrensprodukte auf HDI-Basis auch in hoher Verdünnung in Lacklösungsmitteln stabiler gegen das Auftreten von Ausflockungen bzw. Trübungen, als in größerem Anteil Isocyanuratgruppen enthaltende Produkte des Standes der Technik. Ihre Resistenz gegenüber der Einwirkung von Luftfeuchtigkeit (z.B. Hautbildung im offenen Gebinde, mattes Erscheinungsbild von Flächen, die bei hoher Luftfeuchtigkeit und Umgebungstemperatur lackiert wurden, sog. 'downglossing') ist ebenfalls gegenüber den (fast) ausschließlich Isocyanuratgruppen enthaltenden Produkten verbessert.

Die nachfolgenden Vergleichsbeispiele und Beispiele sollen die Erfindung näher erläutern, ohne sie jedoch einzuschränken.

### Beispiele:

Alle Prozentangaben und ppm-Angaben sind, soweit nicht anders vermerkt, auf das Gewicht bezogen.

Alle Reaktionen wurden unter einer Stickstoffatmosphäre durchgeführt.

Die Bestimmung der NCO-Gehalte erfolgte titrimetrisch nach DIN EN ISO 11909:2007-05.

Die dynamischen Viskositäten wurden bei 23 °C mit dem Viskosimeter Physica MCR 51 von Anton Parr nach der DIN EN ISO 3219:1994-10 bestimmt. Durch Messungen bei unterschiedlichen Schergeschwindigkeiten wurde sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Bestimmung der Restmonomergehalte erfolgte gaschromatographisch mit internem Standard nach DIN EN ISO 10283:2007-11.

Mol-% Angaben wurden NMR-spektroskopisch ermittelt und beziehen sich immer, so nicht anders ausgewiesen, auf die Summe der NCO-Folgeprodukte. Die Messungen erfolgten auf dem Gerät DRX 700 der Fa. Bruker an ca. 1 %igen (¹H-NMR) bzw. ca. 50 %igen (¹³C-NMR) Proben in trockenem C₆D₆ bei 700 MHz (¹H-NMR) bzw. 176 MHz (¹³C-NMR) Meßfrequenz. Als Referenz für die ppm-Skale wurde auf das Signal des im Lösungsmittel enthaltenen C₆D₅H referenziert: 7,15 ppm ¹H-NMR-chem. Verschiebung, 128,02 ppm ¹³C-NMR-chem. Verschiebung. Daten für die chemische Verschiebung der in Frage kommenden Verbindungen wurden der Literatur entnommen (vgl. D. Wendisch, H. Reiff und D. Dieterich, Die Angewandte Makromolekulare Chemie 141, 1986, 173-183 und darin zit. Lit sowie EP-A 896 009).

Die verwendeten Diisocyanate sind Produkte der Covestro AG, D-51365 Leverkusen, alle anderen kommerziell zugänglichen Chemikalien wurden von der Fa. Aldrich, D-82018 Taufkirchen, bezogen.

Die Herstellung der in den erfindungsgemäßen Beispielen verwendeten Katalysatormischungen ist in Beispielreihe 1 beschrieben.

### Beispielreihe 1 Katalysatorherstellung:

Die Herstellung der in den erfindungsgemäßen Beispielen verwendeten Katalysatormischungen erfolgte durch einfaches Homogenisieren der in Tabelle 1 aufgeführten Lösungen der Katalysatoren A und B im in Tabelle 1 angegebenen molaren Verhältnis. Optional (in Tabelle 1 mit * markiert) wurde anschließend mittels Azeotropdestillation bei vermindertem Druck (an die Erfordernisse der jeweiligen Katalysatormischung angepasst zwischen ca. 10 und 100 mbar) entwässert.

Um eine bessere Vergleichbarkeit der einzelnen Katalysatoren untereinander hinsichtlich der Reaktivität und Selektivität in der Modifizierungsreaktion zu erhalten, wurden die Katalysatormischungen durch Zugabe von 2-Ethylhexanol bzw. 2-Propanol einheitlich auf ca. 1,5 bis 2,0 % "aktives Fluorid" eingestellt. Der Begriff "aktives Fluorid" bezieht sich dabei auf den Anteil F⁻ im Anion der allg. Formel {F⁻ · n(HF)}. Er ist beispielsweise durch Subtraktion des Fluoranteils ex HF vom Gesamtfluorgehalt zu erhalten, wobei man letzteren beispielsweise mittels Fluoridionen-sensitiver Elektrode erfassen kann und ersteren mittels acidimetrischer Titration des "HF-Anteils" im Anion (molar equivalent zum Fluor welches über das HF hinzu kommt) bestimmt.

**Tabelle 1: Katalysatorübersicht**

| Katalysator | Kation A | Kation B | Anion A | Anion B | A : B [molar] | n |
|---|---|---|---|---|---|---|
| 1 | Bu₄P⁺ | Bu₄N⁺ | F⁻ · n(HF) | CH₃C(O)O⁻ | 1 : 1 | n = 1 |
| 2 | Bu₄P⁺ | Bu₄N⁺ | F⁻ · n(HF) | F⁻ · n(HF) | 10 : 1 | 1 |
| 3 | Bu₄P⁺ | Bu₄N⁺ | F⁻ · n(HF) | F⁻ · n(HF) | 1 : 1 | 1 |
| 4 | Bu₄P⁺ | Bu₄N⁺ | F⁻ · n(HF) | F⁻ · n(HF) | 1 : 10 | 1 |
| 5 | Bu₄P⁺ | BzMe₃N⁺ | F⁻ · n(HF) | OH⁻ | 1 : 1 | 2 |
| 6* | Bu₄P⁺ | BzMe₃N⁺ | F⁻ · n(HF) | OH⁻ | 1 : 2 | 5 |
| 7 | Bu₄P⁺ | (CH₂)₄N⁺(CH₂)₄ | F⁻ · n(HF) | F⁻ · n(HF) | 1 : 1 | 1 |
| 8 | Bu₄P⁺ | (CH₂)₄N⁺(CH₂)₅ | F⁻ · n(HF) | F⁻ · n(HF) | 1 : 1 | 1 |
| 9 | Bu₄P⁺ | (CH₂)₄N⁺(CH₂)₅ | OH⁻ | F⁻ · n(HF) | 1 : 1 | 2 |
| 10 | Bu₄P⁺ | (CH₂)₄N⁺(CH₂)₅ | F⁻ · n(HF) | F⁻ · n(HF) | 10 : 1 | 1 |
| 11 | Bu₄P⁺ | (CH₂)₄N⁺(CH₂)₅ | F⁻ · n(HF) | F⁻ · n(HF) | 1 : 10 | 1 |
| 12 | Bu₃(n-C₁₄H₂₉)P⁺ | (CH₂)₄N⁺(CH₃)₂ | F⁻ · n(HF) | F⁻ · n(HF) | 1 : 1 | 1 |
| 13 | Bu₃(n-C₁₄H₂₉)P⁺ | (CH₂)₅N⁺(CH₃)₂ | F⁻ · n(HF) | F⁻ · n(HF) | 1 : 1 | 1 |
| 14 | Bu₄P⁺ | BzMe₃N⁺ | F⁻ · n(HF) | Cl⁻ | 10 : 1 | 2 |

| | | | | | | |
|---|---|---|---|---|---|---|
| Bu steht für n-Butyl, Bz steht für Benzyl | | | | | | |

### Beispielreihe 2 (Vergleichsbeispiele)

In einem doppelwandigen, durch einen externen Kreislauf auf 60°C temperierten Planschliffgefäß mit Rührer, an eine Inertgasanlage (Stickstoff/Vakuum) angeschlossenem Rückflusskühler und Thermometer wurden ca. 10 kg HDI vorgelegt und durch einstündiges Rühren im Vakuum (< 1 mbar) von gelösten Gasen befreit. Nach Belüften mit Stickstoff wurde die in Tabelle 2 (Spalte "Kat.lsg. [g]) angegebene Menge einer ca. 30%igen Lösung von Tetra-n-butyl phosphonium hydrogendifluorid in 2-Ethylhexanol ("aktives Fluorid" ca. 1,9 %) portionsweise so dosiert, dass die Exothermie der Reaktion 2-3 °C nicht überschritt. Nachdem der NCO-Gehalt auf ca. 45 +/- 0,3 % gefallen war, wurde der Katalysator durch Zugabe einer zum Katalysator äquimolaren Menge an Dodecylbenzolsulfonsäure, 70%ig in 2-PrOH, desaktiviert, weitere 30 min bei Reaktionstemperatur nachgerührt und anschließend aufgearbeitet.

Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,5 +/- 0,05 mbar, VV-Temperatur: 140°C, HV-Temp.: 160°C), wobei nicht umgesetztes Monomer als Destillat und das monomerenarme Polyisocyanatharz als Sumpfprodukt separiert wurden (Startdurchlauf). Das Polyisocyanatharz wurde separiert und das Destillat in einer zweiten Planschliff-Rührapparatur, die identisch zur ersten aufgebaut ist, gesammelt und mit frisch entgastem HDI auf die Ausgangsmenge (ca. 10 kg) aufgefüllt. Anschließend wurde erneut katalysiert wobei auf minimal mögliche Katalysatormenge geachtet wurde und ansonsten verfahren wie eingangs beschrieben. Dieses Procedere wurde mehrmals wiederholt (Versuche 2-1 bis 2-6). Die Ergebnisse sind Tabelle 2 zu entnehmen.

**Tabelle 2: Eigenschaften der Vergleichspolyisocyanate**

| Bsp. -Nr. | Kat.-lsg. | F (aktiv) auf HDI | Harzmenge | NCO | Viskosität | fr. HDI | Iminooxadiazindione |
|---|---|---|---|---|---|---|---|
| | [g] | [ppm] | [kg] | [%] | [mPas/23°C] | [%] | [mol-%]¹⁾ |
| 2-1 | 7,5 | 14 | 1,7 | 23,7 | 690 | 0,11 | 54 |
| 2-2 | 6,4 | 12 | 1,8 | 23,6 | 640 | 0,12 | 51 |
| 2-3 | 3,2 | 6 | 1,8 | 23,7 | 730 | 0,14 | 38 |
| 2-4 | 2,5 | 5 | 1,9 | 23,6 | 770 | 0,10 | 31 |
| 2-5 | 2,2 | 4 | 1,6 | 23,8 | 850 | 0,12 | 28 |
| 2-6 | 2,0 | 4 | 1,7 | 23,7 | 920 | 0,16 | 24 |

| | | | | | | | |
|---|---|---|---|---|---|---|---|
| ¹⁾: Iminooxadiazindiongruppengehalt relativ in Summe Trimere (Iminooxadiazindione und Isocyanurate, durch NMR ermittelt) | | | | | | | |

Bei den erhaltenen Harzen handelte es sich ausnahmslos um farbhelle, klare, viskose Flüssigkeiten ohne wahrnehmbaren Amingeruch. Die mit niedrigerer Katalysatorkonzentration hergestellten Produkte der Beispiele 2-3 bis 2-6 weisen einen mit der fallenden Katalysatorkonzentration fallenden Gehalt an Iminooxadiazindiongruppen auf.

### Beispielreihe 3 (erfindungsgemäß)

Es wurde unter Einsatz der Katalysatoren aus Beispielreihe 1 jeweils so verfahren, wie in Beispielreihe 2 angegeben. In Tabelle 2 ist je Katalysatortyp immer nur das Ergebnis des (i.d. Regel letzten) Versuches einer analog 2-1 bis 2-6 durchgeführten Reihe angegeben, bei welchem die niedrigste Katalysatorkonzentration realisiert werden konnte. Viskosität, NCO-Gehalt, Restgehalt an freiem HDI und der Habitus der Produkte (farbhelle, klare, viskose Flüssigkeiten) entspricht dem der in Beispielreihe 2 aufgeführten Produkte mit vergleichbarem Iminooxadiazindiongruppenanteil und wurde daher in Tabelle 3 nicht separat ausgewiesen. Wie man erkennt, ist der Verlust an Iminooxadiazindion-Selektivität bei sinkender Katalysatorkonzentration weit weniger stark ausgeprägt als in den Vergleichsbeispielen der Beispielserie 2-3 bis 2-6.

**Tabelle 3: Eigenschaften der nach dem erfindungsgemäßen Verfahren erhaltenen Polyisocyanate**

| Beispiel -Nr. | Katalysator lt. Tabelle 1 | F (aktiv) auf HDI [ppm] | Iminooxadiazindione [mol-%]¹⁾ |
|---|---|---|---|
| 3-1 | 1-1 | 5 | 46 |
| 3-2 | 1-2 | 6 | 43 |
| 3-3 | 1-3 | 3 | 48 |
| 3-4 | 1-4 | 5 | 48 |
| 3-5 | 1-5 | 6 | 52 |
| 3-6 | 1-6 | 6 | 54 |
| 3-7 | 1-7 | 3 | 48 |
| 3-8 | 1-8 | 3 | 48 |
| 3-9 | 1-9 | 4 | 45 |
| 3-10 | 1-10 | 6 | 43 |
| 3-11 | 1-11 | 4 | 50 |
| 3-12 | 1-12 | 5 | 47 |
| 3-13 | 1-13 | 5 | 48 |
| 3-14 | 1-14 | 6 | 44 |

| | | | |
|---|---|---|---|
| ¹⁾: Iminooxadiazindiongruppengehalt relativ in Summe Trimere (Iminooxadiazindione und Isocyanurate, durch NMR ermittelt) | | | |

## Patentansprüche

1. Verfahren zur Herstellung von Polyisocyanaten, die mindestens 10 mol-% an Iminooxadiazindiongruppen, bezogen auf die Summe der im Polyisocyanat enthaltenen Iminooxadiazindion- und Isocyanuratgruppen, enthalten, durch Umsetzung wenigstens eines organischen Di- oder Polyisocyanats mit unabhängig voneinander aliphatisch, cycloaliphatisch und/oder araliphatisch gebundenen Isocyanatgruppen, in Gegenwart von Katalysatoren für die Isocyanatmodifizierung umfassend
- wenigstens ein quaternäres Phosphoniumsalz der allgemeinen Formel R₄P⁺ A⁻, wobei
R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Phosphoratom auch gesättigte oder ungesättigte Cyclen bilden können, und
A⁻ für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann, und
- wenigstens ein quaternäres Ammoniumsalz der allgemeinen Formel R₄N⁺ A⁻, wobei
R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Stickstoffatom auch gesättigte oder ungesättigte Cyclen bilden können, und
A⁻ für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻ · n(HF)} steht, wobei n beliebige Werte zwischen 0,1 und 20 annehmen kann,
mit der Maßgabe, dass A⁻ in wenigstens einem der quaternären Phosponiumsalze und/oder in wenigstens einem der quaternären Ammoniumsalze für Fluorid oder Polyfluoridanionen {F⁻ · n(HF)} steht, wobei n beliebige Werte zwischen 0,1 und 20 annehmen kann.

2. Verfahren nach Anspruch 1, **dadurch gekennzeichnet, dass** die Polyisocyanate mindestens 30 mol-%, bevorzugt mindestens 35 mol-% und ganz besonders bevorzugt mindestens 40 mol-% an Iminooxadiazindiongruppen, bezogen auf die Summe der im Polyisocyanat enthaltenen Iminooxadiazindion- und Isocyanuratgruppen, enthalten.

3. Verfahren nach Anspruch 1 oder 2, **dadurch gekennzeichnet, dass** 5 bis 95 mol-%, bevorzugt 10 bis 90 mol-% und besonders bevorzugt 20 bis 80 mol-% der eingesetzten Katalysatoren als Anion A⁻ Spezies vom Fluorid bzw. Polyfluoridtyp enthalten.

4. Verfahren nach einem der vorhergehenden Ansprüche, **dadurch gekennzeichnet, dass** 5 bis 95 mol-%, bevorzugt 10 bis 90 mol-% und besonders bevorzugt 20 bis 80 mol-% der eingesetzten Katalysatoren als Kation Spezies vom Phosphoniumtyp R₄P⁺ enthalten.

5. Verfahren nach einem der vorhergehenden Ansprüche, **dadurch gekennzeichnet, dass** das quaternäre Ammoniumsalz eine Verbindung ist, bei der das ladungstragende Stickstoffatom im Kation Teil eines, ggf. spirocyclischen, Ringsystemes gemäß den allgemeinen Formeln I und II ist, 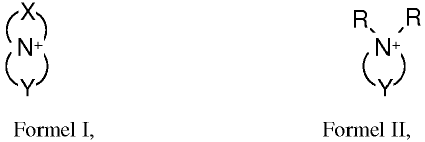 in welchen R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und die N-ständigen Substituenten X und Y für gleiche oder verschiedene, substituierte oder unsubstituierte, ggf. durch Heteroatome (O, N, S) sowie aromatische Ringe unterbrochene C₂-C₂₀-Alkylenketten stehen.

6. Verfahren nach Anspruch 5, **dadurch gekennzeichnet, dass** X und Y in Formel I und Y in Formel II unabhängig voneinander für ggf. substituierte Alkylengruppen stehen, wobei C₄-C₆-Alkylenketten insbesondere in beiden N-zentrierten Ringen besonders bevorzugt sind.

7. Verfahren nach einem der vorhergehenden Ansprüche, **dadurch gekennzeichnet, dass** die Umsetzung in Gegenwart wenigstens eines Alkohols mit einem Molekulargewicht von 32 - 250 g/mol durchgeführt wird, bevorzugt wird dieser Alkohol als Katalysatorlösungsmittel eingesetzt.

8. Verfahren nach Anspruch 7, **dadurch gekennzeichnet, dass** der bevorzugt als Katalysatorlösungsmittel eingesetzte Alkohol ein geradkettiger oder verzweigter, primärer, sekundärer oder tertiärer Alkohol mit ein bis zwanzig C-Atomen, bevorzugt mit ein bis acht C-Atomen, ist.

9. Verfahren nach einem der vorhergehenden Ansprüche, **dadurch gekennzeichnet, dass** die Katalysatoren in einer Konzentration anwesend sind, so dass zwischen 1 ppm und 0,1% und bevorzugt zwischen 1 und 100 ppm an Fluoridionen, bezogen auf die Gesamtmenge der eingesetzten Di- oder Polyisocyanate, vorhanden sind.

10. Verfahren nach einem der vorhergehenden Ansprüche, **dadurch gekennzeichnet, dass** das organische Di- oder Polyisocyanat ausgewählt wird aus der Gruppe bestehend aus PDI, HDI, MPDI, 1,3- sowie 1,4-H₆XDI, 1,3- sowie 1,4-XDI, NBDI und Mischungen aus HDI und IPDI.

11. Verwendung einer Mischung umfassend
- wenigstens ein quaternäres Phosphoniumsalz der allgemeinen Formel R₄P⁺ A⁻, wobei
R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Phosphoratom auch gesättigte oder ungesättigte Cyclen bilden können, und
A⁻ für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻· n(HF)} steht, wobei n beliebige Werte zwischen 0,1 und 20 annehmen kann, und
- wenigstens ein quaternäres Ammoniumsalz der allgemeinen Formel R₄N⁺ A⁻, wobei
R unabhängig voneinander für gleiche oder verschiedene, substituierte oder unsubstituierte, ggf. verzweigte, aliphatische C₁-C₂₀ Reste, aromatische C₆-C₂₀ Reste oder araliphatische C₇-C₂₀ Reste steht und ggf. zwei oder mehrere Reste R untereinander und mit dem Stickstoffatom auch gesättigte oder ungesättigte Cyclen bilden können, und
A⁻ für ein Anion ausgewählt aus der Gruppe bestehend aus Hydroxid, Alkoholat, Carboxylat, Azolat, Imidazolat, Triazolat, Chlorid, Fluorid und Polyfluoridanionen {F⁻· n(HF)} steht, wobei n beliebige Werte zwischen 0,1 und 20 annehmen kann,
mit der Maßgabe, dass A⁻ in wenigstens einem der quaternären Phosponiumsalze und/oder in wenigstens einem der quaternären Ammoniumsalze für Fluorid oder Polyfluoridanionen {F⁻ · n(HF)} steht, wobei n beliebige Werte zwischen 0,1 und 20 annehmen kann, als Katalysator für die Isocyanatmodifizierung.

12. Polyisocyanate, herstellbar oder hergestellt gemäß einem Verfahren der Ansprüche 1 bis 10.

13. Verfahren zur Herstellung eines Polyurethanlacks oder einer Polyurethanbeschichtung, wobei wenigstens ein Polyisocyanat gemäß Anspruch 12 mit wenigstens einer Verbindung, die gegenüber NCO-Gruppen reaktive Gruppen aufweist, vermischt und unter Aushärtung umgesetzt wird.

14. Polyurethanlack oder Polyurethanbeschichtung, herstellbar oder hergestellt gemäß einem Verfahren nach Anspruch 13.
